# EUROPÄISCHE PATENTSCHRIFT

(11) **EP 0 696 344 B1**
(45) Veröffentlichungstag und Bekanntmachung des Hinweises auf die Patenterteilung: **08.07.1998**
(21) Anmeldenummer: 94926241.4
(22) Anmeldetag: 06.09.1994
(51) Int. Cl.: G01B 7/13, G01B 7/28, G01B 7/14

(54) **EINRICHTUNG ZUR VERMESSUNG VON ZYLINDERDEFORMATIONEN AN KOLBENVERBRENNUNGSMOTOREN**
DEVICE FOR MEASURING CYLINDER DISTORTION IN PISTON-TYPE INTERNAL-COMBUSTION ENGINES
DISPOSITIF POUR MESURER LA DEFORMATION SUBIE PAR LES CYLINDRES DANS LES MOTEURS A COMBUSTION INTERNE A PISTON

(30) Priorität: 25.02.1994 DE 4406132
(43) Veröffentlichungstag der Anmeldung: 14.02.1996
(73) Patentinhaber: FEV Motorentechnik GmbH & Co. KG, D-52078 Aachen (DE)
(72) Erfinder: ESCH, Thomas, D-52070 Aachen (DE); HAAS, Albert, B-4731 Eynatten (BE); ORGRZEWALLA, Jürgen, D-52428 Jülich (DE); KOCH, Franz, D-52078 Aachen (DE)
(74) Vertreter: Langmaack, Jürgen, Dipl.-Ing.
(86) Internationale Anmeldenummer: EP9402961
(87) Internationale Veröffentlichungsnummer: WO9523323

(56) Entgegenhaltungen:
- EP-A- 0 438 360
- DE-A- 1 965 892
- PATENT ABSTRACTS OF JAPAN vol. 15, no. 214 (P-1209) 31. Mai 1991 & JP,A,03 059 436 (ISUZU MOTORS LTD)
- DATABASE WPI Week 8647, Derwent Publications Ltd., London, GB; AN 86-311135 & SU,A,1 226 029 (ISSINSKII YU G) 23. April 1986
- DATABASE WPI Week 8934, Derwent Publications Ltd., London, GB; AN 89-247310 & SU,A,1 441 183 (CHELY AGRIC MECH) 30. November 1988
- MTZ MOTORTECHNISCHE ZEITSCHRIFT, Bd.31, Nr.12, 1970, STUTTGART DE Seiten 505 - 511 F.STECHER 'Zylinderverformungen -Untersuchungen in einer Modellanlage und im laufenden Motor' in der Anmeldung erwähnt
- PATENT ABSTRACTS OF JAPAN vol. 12, no. 210 (P-717) 16. Juni 1988 & JP,A,63 009 811 (MITSUBISHI HEAVY IND LTD)

## Beschreibung

Ideal für die Funktion und Lebensdauer des tribologischen Systems Kolben-Kolbenringe-Zylinderbuchse ist ein kreisrundes Zylinderrohr. Neben Fertigungsungenauigkeiten kommt es insbesondere durch die thermischen und mechanischen Belastungen, die auf ein Zylinderrohr einwirken, zu Abweichungen des Zylinderrohres von seiner idealen Geometrie. Die mechanischen Belastungen sind auf Verspannungen durch die Montage von Zylinderkopf und Zylinderkopfdichtungen zurückzuführen. Die thermischen Belastungen entstehen durch unterschiedliche Wärmeausdehnung der miteinander verbundenen Motorenteile, insbesondere von Kurbelgehäuse und Zylinderkopf, durch Temperaturgradienten im Betrieb sowie durch den Gasdruck im Betrieb. Durch diese Deformationen, die eine Abweichung von der idealen Geometrie des Zylinderrohres darstellen, wird der Ölverbrauch, das Durchblase- und Verschleißverhalten sowie über erhöhte Reibung auch der Kraftstoffverbrauch beeinflußt.

Bei der Neuentwicklung eines Motors ist man nun bestrebt, diese unterschiedlichen Einflüsse durch konstruktive Maßnahmen weitgehend auszuschalten, um auch im Betrieb die ideale Geometrie des Zylinderrohres möglichst einhalten zu können.

Man hat nun versucht, derartige Zylinderdeformationen zu erfassen. Die hier relevanten Veröffentlichungen sind im Anschluß an die Anmeldungsbeschreibung in einer Liste aufgeführt und nachstehend nur mit dem Namen des Autors gekennzeichnet. So ist beispielsweise in den Veröffentlichungen von K. Lönne und P. Jöhren jeweils ein Verfahren beschrieben, bei denen Zylinderdeformationsmessungen statisch durchgeführt wurden, so daß nur die konstruktiv bedingten Belastungszustände simuliert werden konnten. Die Einflüsse durch den Motorbetrieb fehlen, so daß die hieraus resultierenden Belastungszustände gar nicht erfaßbar sind, da Unterschiede in den Bauteiltemperaturen durch den Verbrennungsvorgang und zusätzliche mechanische Belastungen durch die Gaskräfte im Motorbetrieb nicht erfaßbar sind.

In der Veröffentlichung von Stecher (MTZ 31, 1970, 12, 505 - 511) ist ein Verfahren beschrieben, das eine Messung von Zylinderdeformationen im Betrieb ermöglicht. Zur Durchführung dieses Verfahrens sind Taststifte vorgesehen, die in einer Querbohrung im Kolben verschiebbar gelagert sind und die mit ihrem einen Ende an der Zylinderwandung anliegen und mit ihrem anderen Ende über eine Rückstellfeder auf einen Meßsensor einwirken. Die Messung ist jedoch nur bei niedrigen Drehzahlen möglich, da bei höheren Drehzahlen die an den Taststiften wirksam werdenden Massenkräfte zu Verfälschungen des Ergebnisses führen. Ein weiterer Nachteil dieses vorbekannten Verfahrens liegt darin, daß der Temperatureinfluß und die dadurch bewirkte Längenänderung der Taststifte selbst nicht berücksichtigt werden kann, so daß sich auch hieraus Verfälschungen des Meßergebnisses ergeben. In gleicher Weise ist auch die Patent Abstracts of Japan JP-A- 63 009 811 zu bewerten, da auch hier ein an der Zylinderwandung anliegender Taststift in einer Bohrung im Kolben geführt ist, der mit einem Sensor zusammenwirkt.

Aus Derwent SU-A-1 226 029 ist eine Anordnung bekannt, bei der in einer Nut im Kolben ein elektro-induktiver Sensor befestigt ist, dem ein in der Nut "schwimmend" gelagerter verformbarer Druckring zugeordnet ist, der an der Zylinderwandung anliegt. Bei dieser Einrichtung soll die Zylinderdeformation dadurch erfaßt werden, daß der Abstand zwischen dem Sensor und der Innenfläche des Druckrings gemessen wird. Der Nachteil dieser Einrichtung besteht darin, daß zum einen der Druckring in der Nut "schwimmend" gelagert ist, so daß ein eindeutiger Bezug zur Kolbenachse fehlt. Ein weiterer Nachteil besteht darin, daß der an der Zylinderwandung anliegende Kolbenring zwar verformbar ist, aber in sich als im wesentlichen steifes Element angesehen werden muß, so daß die tatsächliche, aufgrund von Deformationen vorhandene Kontur der Zylinderwandung in Umfangrichtung gar nicht erfaßt werden kann, da sich der Druckring nicht entsprechend dieser Kontur an der Zylinderwandung anlegen kann.Durch Temperaturdehnungen des Kolbens ergeben sich darüber hinaus weitere Verfälschungen des Meßergebnisses.

Aus Derwent SU-A-1 441 183 ist eine Weiterentwicklung der vorstehenden Einrichtung bekannt, bei der ebenfalls ein in einer Nut im Kolben "schwimmend" geführter Druckring vorgesehen ist, dem ein im Nutgrund fest angeordneter Sensor zugeordnet ist, der auf die Auswerteeinrichtung des anderen Sensors aufgeschaltet ist, so daß durch eine vergleichende Messung des an der Zylinderwandung anliegenden Druckringes zum ersten, im Nutgrund angeordneten Sensor und eine Messung des Abstandes zwischen der Zylinderwandung und der Kolbenwandung Rückschlüsse auf die Zylinderdeformation gezogen werden sollen. Auch bei diesem System treten die vorstehend erörterten Nachteile auf, wobei beide Systeme infolge des an der Zylinderwandung wenigstens teilweise anliegenden Druckringes eine berührungslose Messung gar nicht erfolgt, sondern lediglich die Übertragung zwischen Druckring und induktivem Sensor berührungslos erfolgt.

Der Erfindung liegt nun die Aufgabe zugrunde, eine Einrichtung zur Vermessung der Zylinderdeformationen an Kolbenverbrennungsmotoren zu schaffen, die es ermöglicht, Zylinderdeformationen sowohl unter statischer Belastung als auch unter Betriebsbelastung, und zwar bei laufendem Motor, zu erfassen.

Diese Aufgabe wird mit einer Einrichtung zur Vermessung der Deformationen von Zylindern einer Kolbenverbrennungsmaschine gelöst, die einen im zu messenden Zylinder führbaren Kolben aufweist, der wenigstens zwei radiale Bohrungen aufweist, in denen jeweils an einem Trägerelement ein elektrisch-induktiver Wegsensor gegenüber dem Kolben relativ bewegbar und berührungslos mit Abstand zur Zylinderwandung gehalten ist, wobei die Trägerelemente jeweils im Bereich der Kolbenachse am Kolben befestigt sind und die Signalleitungen der einzelnen Wegsensoren mit einer Meß- und Auswerteeinheit verbindbar sind. Eine derartige Einrichtung bietet die Möglichkeit zur Vermessung der Zylindergeometrie nicht nur im statischen Verfahren sondern vor allem auch bei laufendem Motor. Da die Deformationen des Zylinderrohres sich entscheidend auf das Dichtverhalten der Kolbenringe auswirken, bietet die erfindungsgemäße Anordnung der Wegsensoren, die berührungslos den Abstand zur benachbarten Zylinderwandung erfassen, den Vorteil, daß die Deformationen gerade in diesem Bereich gemessen werden. Ein weiterer Vorteil der Erfindung besteht darin, daß keine Spezialkolben verwendet werden müssen, sondern daß Serienkolben eingesetzt werden können, in die lediglich die entsprechenden Radialbohrungen einzubringen sind und dann die Trägerelemente einzusetzen sind. Damit ist die Möglichkeit gegeben, die Zylinderkontur während der Hubbewegung des Kolbens unmittelbar im jeweiligen Anlagebereich der Kolbenringe berührungslos "abzutasten". Durch die Verwendung induktiver Wegsensoren ist es darüber hinaus möglich, das von jedem Wegsensor abgegebene Signal gesondert zu erfassen, so daß entsprechend der Zahl der verwendeten Wegsensoren in der Meß- und Auswerteeinheit auch die entsprechende Zahl von Meßsignalen gleichzeitig zur Verfügung steht und damit ein unmittelbares "Abbild" der Zylinderkontur gegeben werden kann. Da die Wegsensoren mit ihren Trägerelementen in den Bohrungen des Kolben relativ zu diesem bewegbar, d. h. also schwimmend gehalten sind, wirken sich Deformationen des Kolbens selbst, beispielsweise Wärmedehnungen des Kolbens oder mechanische Verformungen unter dem Einfluß des Gasdruckes nicht auf die Position der Wegsensoren - bezogen zur Kolbenmittelachse - aus, so daß hier lediglich das Wärmedehnungsverhalten der Trägerelemente bei der Signalverarbeitung mit zu berücksichtigen ist.

Um die Verfälschungen des Meßsignals durch Wärmedehnungen des Trägerelementes möglichst gering zu halten, ist in einer bevorzugten Ausgestaltung der Erfindung vorgesehen, daß die Trägerelemente aus einem Material mit sehr niedrigem Wärmeausdehnungskoeffizienten bestehen. Hierzu wird vorteilhafterweise eine unter der Bezeichnung Invar bekannte Metallegierung verwendet, deren Wärmeausdehnungskoeffizient α zwischen - 0,5 und + 2 • 10⁻⁶ grd⁻¹ liegt. Zweckmäßigerweise wird ein Material verwendet, das einen Wärmeausdehnungskoeffizienten von etwa 1 • 10⁻⁶/grd C aufweist.

Da die Meßsignale der einzelnen Wegsensoren gleichzeitig erfaßt und herausgeführt werden können, ist es besonders vorteilhaft, wenn jeweils zwei Wegsensoren diametral nach außen weisend am Kolben angeordnet sind. Durch eine derartige paarweise diametrale Anordnung ist es möglich, immer eine Erfassung der Zylinderkontur über einen Durchmesser vorzunehmen. Zweckmäßig ist hierbei die Anordnung von acht Wegsensoren, die jeweils diametral und jeweils unter 45° versetzt zueinander angeordnet sind, so daß für die Auswertung der Meßsignale mit Hilfe von Fourierreihen die Abweichungen von der idealen Kreisform ermittelt werden können. Dabei ist über die Fourierkoeffizienten eine Beschreibung der Zylinderdeformation möglich. Da zur Berechnung der Fourierordnung jeweils die doppelte Anzahl an Meßpunkten auf dem Umfang erforderlich ist, wie Ordnungen berechnet werden sollen, ermöglicht die Anordnung von acht Sensoren die Berechnung bis zur vierten Fourierordnung. Hieraus läßt sich auch ableiten, daß in Verbindung mit der zentralen Befestigung der Wegsensoren mit ihren Trägerelementen am Kolben nicht nur die Zylinderdeformation laufend entsprechend der Hubbewegung erfaßt werden kann, sondern daß zugleich auch die Querbewegung des Kolbens bei der Auswertung der Meßergebnisse über ein entsprechendes Rechenprogramm mit berücksichtigt werden kann, durch das die Exzentrizität des Kolbenmittelpunktes, der zugleich Meßmittelpunkt ist, durch Referenzkreisbildung in bezug auf ein festes Koordinatensystem ermittelt werden kann. Der Verlauf der Exzentrizität stellt dabei die Kolbenquerbewegung dar.

Mit Hilfe dieser Meßeinrichtung ist es möglich, bei der Entwicklung von Verbrennungsmotoren mit verzugsarmen Zylinderrohren schrittweise vorzugehen, wobei gegenüber dem bisherigen Stand der Technik die Zahl der Entwicklungsschritte erheblich reduziert werden kann. Zunächst erfolgt eine rechnerische Simulation der Beanspruchungen und des Zylinderrohrverzuges mit Hilfe entsprechender rechnergetützter Konstruktionsprogramme (CAE) sowie von Untersuchungen der gefundenen Konstruktion nach der Methode der Finiten Elemente (FEM). Dabei werden die Temperaturverteilung und die Verformungen mittels FEM berechnet. Die für die FEM-Rechnungen erforderlichen Randbedingungen, wie zum Beispiel die Wärmeströme und die Wärmeübergänge, werden mittels spezieller Simulationsprogramme ermittelt. Dabei ist jedoch die Aussagekraft der absoluten Ergebnisse dieser Rechnungen begrenzt, da Annahmen und Vereinfachungen getroffen werden müssen. In einem nächsten Schritt erfolgt dann an einem Prototyp die Messung des Zylinderrohrverzuges am Motor im Betrieb mit der erfindungsgemäßen Meßeinrichtung die Erfassung der tatsächlichen Zylinderrohrverzüge unter dem Einfluß der mechanischen und thermischen Belastung.

Zur Erfassung der Zylinderdeformationen bei laufendem Motor ist in Ausgestaltung der Erfindung vorgesehen, daß der mit den Wegsensoren bestückte Kolben über eine Pleuelstange mit der Motorkurbelwelle verbunden ist und daß die Signalleitungen der einzelnen Wegsensoren über ein mit dem Kolben verbundenes Übertragungselement aus dem Motor herausgeführt sind. Bei entsprechender Ausgestaltung des Übertragungselementes und unter Berücksichtigung der dynamischen Belastungen im Betrieb ist es somit möglich, diese Messungen auch im Bereich der Nenndrehzahlen des zu untersuchenden Motors durchzuführen.

Mit Hilfe der so gewonnenen Meßergebnisse werden dann die Rechenmodelle der CAE- und FEM-Programme durch Vergleich von Rechnung und Messung kalibriert. Die überarbeitete Konstruktion kann dann mit der erfindungsgemäßen Einrichtung erneut meßtechnisch überprüft werden. Damit ist es möglich, durch konstruktive Maßnahmen zu einer Verringerung der Zylinderverzüge zu kommen und sich dem Idealzustand eines kreisrunden Zylinderrohres zu nähern und somit zu einer wesentlichen Optimierung der Form der Kolbenringe und des Kolbens zu gelangen. Da die Kolbenringe dann ein besseres Abdichtverhalten am deformationsarmen Zylinderrohr aufweisen, kommt es zu einer Verringerung des Ölverbrauchs und des Durchblasens. Hierdurch ist ferner eine Absenkung der Kolbenringvorspannung möglich, wodurch die Reibung des Bauelementes "Kolben" im Zylinder reduziert und damit der Kraftstoffverbrauch des Motors abgesenkt werden kann.

In zweckmäßiger Ausgestaltung der Erfindung ist vorgesehen, daß die Trägerelemente rohrförmig ausgebildet sind und die Signalleitungen des jeweils zugeordneten Wegsensors aufnehmen. Zweckmäßig ist hierbei, wenn die Trägerelemente über ein zentrales Befestigungselement am Kolben befestigt sind. Damit können die Signalleitungen von den einzelnen Wegsensorgen geschützt bis in den Bereich des Befestigungselementes zusammengeführt werden.

In besonders vorteilhafter Ausgestaltung der Erfindung ist vorgesehen, daß das Übertragungselement durch eine Schwinge gebildet wird, die seitlich außen am Motorblock um eine quer zur Zylinderachse ausgerichtete Achse schwenkbar gelagert ist und die mit ihrem freien Ende mit dem Kolben gelenkig verbunden ist. Mit Hilfe eines derart ausgebildeten Übertragungselementes ist es möglich, die in der Kolbenmitte oberhalb des Kolbenbolzens zusammengefaßten Sigalleitungen nach außen zu führen. Die Schwinge ragt hierbei durch eine möglichst klein zu haltende Öffnung im Kurbelgehäuse in den Raum unterhalb des Zylinders hinein, wobei die Schwenkebene der Schwinge parallel zur Bewegungsebene des zugehörigen Pleuels ausgerichtet ist. Die Signalleitungen werden hierbei auf der Schwinge verlegt und so zuverlässig und geschützt nach außen geführt.

In besonders zweckmäßiger Ausgestaltung der Erfindung ist vorgesehen, daß das freie Ende der Schwinge über einen Zwischenlenker am Kolben angelenkt ist. Diese Anordnung hat den Vorteil, daß der Einfluß von Querkräften aus der Bewegung der Schwinge auf den Kolben weitgehend ausgeschaltet wird.

In besonders vorteilhafter Ausgestaltung der Erfindung ist ferner vorgesehen, daß die Schwinge in etwa V-förmig ausgebildet ist, wobei die gehäusefeste Anlenkung des einen Schwingenendes einerseits und die Anlenkung des freien Endes der Schwinge am Kolben andererseits bei dessen Stellung im oberen Totpunkt in etwa auf gleicher Höhe liegen. In bevorzugter Ausgestaltung ist hierbei ferner vorgesehen, daß der in den Motorraum hineinragende, das freie Ende der Schwinge bildende Schwingenarm bogenförmig, vorzugsweise kreisbogenförmig ausgebildet ist. Bei einer kreisbogenförmigen Ausbildung liegt hierbei bevorzugt der Mittelpunkt des Kreisbogens in der Schwenkachse der gehäusefesten Anlenkung der Schwinge. Eine derartige Ausbildung des Übertragungselementes bietet die Möglichkeit, daß es aufgrund seiner besonderen V-förmigen Konstruktion einen sehr geringen Raumbedarf im Motorblock hat. Dies führt bei entsprechender Auslegung dazu, daß das Schwingensystem neben einer sehr kleinen Durchtrittsöffnung im Motorblock keine oder nur geringfügige Änderungen an der Kurbelwelle und am Pleuel erfordert. Gleichwohl läßt sich das Übertragungselement mit der erforderlichen Festigkeit auslegen, so daß Messungen bis in den Bereich der Nenndrehzahl des zu untersuchenden Motors möglich sind. Insbesondere die kreisbogenförmige Ausgestaltung des in den Motorraum hineinragenden Schwingenarms erlaubt eine Bemessung der Schwingendurchtrittsöffnung im Motorblock in einer Weise, daß dieser Eingriff in das System sich auf das Meßergebnis nicht auswirkt. Insbesondere ist es möglich, die Durchtrittsöffnung so schmal auszubilden, daß keine Versteifungsrippen angeschnitten oder entfernt werden müssen.

In weiterer Vorteilhafter Ausgestaltung der Erfindung ist vorgesehen, daß die Signalleitungen der Wegsensoren auf der Schwinge und/oder dem Zwischenlenker befestigt sind und jeweils an den Anlenkungen durch axiale Bohrungen der Gelenke von einem Teil zum anderen Teil geführt sind. Dadurch, daß die Signalleitungen durch entsprechende axiale Bohrungen in den jeweiligen Gelenkbolzen hindurchgeführt werden, können die auf die Siganlleitungen wirkenden Winkeländerungen möglichst gering gehalten werden. Die Signalleitungen werden nur auf Torsion, nicht aber auf Biegung belastet. Dadurch kann ein Kabelbruch aufgrund ständig wechselnder Biegebeanspruchungen der Signalkabel in den Gelenken weitestgehend vermieden werden.

In weiterer Ausgestaltung der Erfindung ist vorgesehen, daß mit Abstand oberhalb der unteren Totpunktstellung der Wegsensoren in der Zylinderlauffläche in Zylinderachsrichtung ausgerichtete, jeweils einem Wegsensor zugeordnete Kalibriernuten mit vorgegebener Tiefe angeordnet sind, die bei der Kolbenbewegung von dem zugehörigen Wegsensor überstrichen werden. Die Anordnung derartiger Kalibriernuten erlaubt während des Betriebes eine Kontrolle der gesamten Meßeinrichtung und ggf. eine Nachkalibrierung der Sensoren. Da diese Kalibriernuten im unteren Bereich des zu untersuchenden Zylinderrohres angeordnet sind, also in einem Bereich, der den Deformationen weniger unterworfen ist als der besonders kritische Bereich in Nähe des Zylinderkopfes, ergibt sich bei jedem Kolbenhub eine zuverlässige Kontrolle, aus der zu ersehen ist, ob die Ausgangskalibrierung der Wegsensoren noch gegeben ist.

Die erfindungsgemäße Meßeinrichtung kann nun sowohl zu statischen Verzugsmessungen als auch - und hierbei bevorzugt - zu Verzugsmessungen unter Betriebsbedingungen verwendet werden, so daß eine universelle Anwendungsmöglichkeit gegeben ist.

Die Erfindung wird anhand schematischer Zeichnungen näher erläutert. Es zeigen:
- Fig. 1: einen Vertikalschnitt durch ein Zylinderrohr mit Kolben,
- Fig. 2: die Verbindung des Kolbens mit einem Übertragungselement,
- Fig. 3: einen Schnitt gem. der Linie III-III in Fig. 2 in vergrößerter Darstellung,
- Fig. 4: in Form eines Blockschaltbildes die Kalibrierung,
- Fig. 5: die Darstellung einer unter Betriebsbedingungen verzogenen Zylinderlauffläche in starker Vergrößerung,
- Fig. 6: Verzugskonturen der Zylinderlauffläche im oberen Totpunkt bei unterschiedlichen Betriebszuständen,
- Fig. 7: in einem Blockschaltbild den Ablauf des Meß- und Auswerteverfahrens,
- Fig. 8: einen Signalschrieb,
- Fig. 9.1: eine kaltstatische Zylinderverzugsmessung mit einer 3-D-Meßmaschine im Vergleich zu einer erfindungsgemäßen Meßeinrichtung,
- Fig. 9.2: einen Vergleich einer warmstatischen Zylinderverzugsmessung.

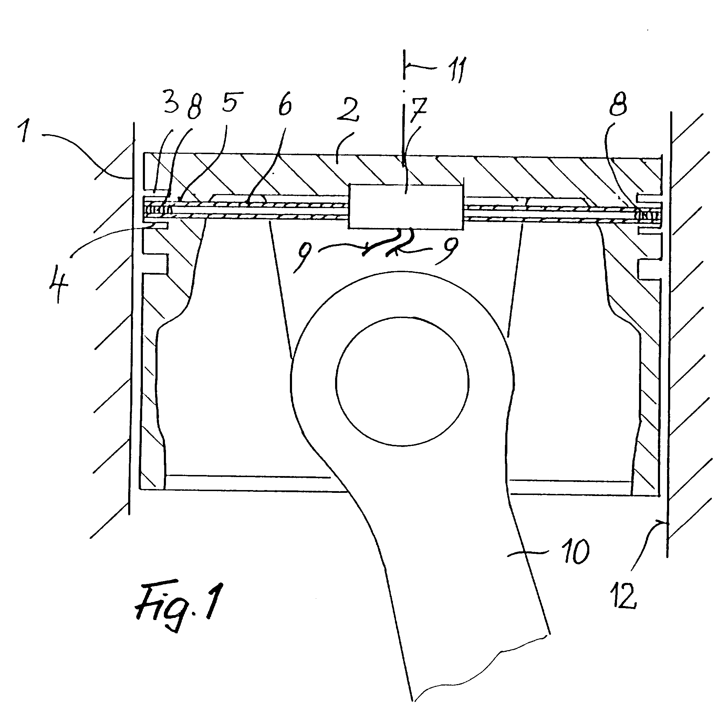

Die Schnittdarstellung in Fig. 1 zeigt einen Vertikalschnitt durch ein Zylinderrohr 1 eines zu untersuchenden Kolbenverbrennungsmotors. Bei dem zu untersuchenden Kolbenverbrennungsmotor werden die vorgesehenen Serienkolben 2 verwendet, wie dies aus der Zeichnung zu erkennen ist. In den Kolben 2 sind nun in der Zone zwischen dem ersten und dem zweiten Kolbenring, die hier nur durch die entsprechenden Aufnahmenuten 3 und 4 im Kolben 2 angedeutet sind, radiale Bohrungen 5 angebracht, die diametral gegenüberliegen. Bei dem hier beschriebenen Ausführungsbeispiel sind insgesamt acht derartiger Bohrungen vorgesehen, die jeweils unter 45° zueinander verlaufen. In diese Bohrungen 5 sind mit geringem Spiel rohrförmige Trägerelemente 6 eingesteckt, die über ein zentrales Befestigungselement 7 auf der Unterseite des Kolbenbodens festgelegt sind. Am äußeren Ende des jeweiligen Trägerelementes 6 ist ein elektro-induktiver Wegsensor 8 eingesetzt, der einen Meßbereich von etwa 500 µm aufweist bei einer Nichtlinearität von etwa 0,2%. Bei Messungen im Betrieb, d. h. unter Temperatureinfluß können mit derartigen Wegsensorgen Messungen mit einer Reproduzierbarkeit erreicht werden, die unter 3 µm liegen. Die Signalleitungen 9 der einzelnen Wegsensoren 8 sind durch die zugehörigen rohrförmigen Trägerelemente bis zum zentralen Befestigungselement 7 zusammengeführt und dort über eine entsprechende Ausgangsöffnung nach außen geführt. Der Kolben 2 ist in üblicher Weise über ein Pleuel 10 mit der Kurbelwelle verbunden, wobei, wie vorstehend angegeben, es sich insgesamt um einen betriebsfähigen Motor handelt.

Zur Vermeidung von Quereinflüssen aus der Kolbenverformung sind die Trägerelemente 6 sowie das zentrale Befestigungselement 7 aus einem Material mit sehr niedrigem Wärmeausdehnungskoeffizienten hergestellt, so daß der vorgegebene Abstand von der Kolbenachse 11 bis zur messenden Spitze der Wegsensoren 8 unabhängig von der jeweiligen Temperaturlage praktisch konstant ist. Da die Trägerelemente 6 lose bzw. schwimmend in den Bohrungen 5 geführt sind, kann der Kolben sich frei in radialer Richtung ausdehnen. Als Material für die Trägerelemente 6 und das zentrale Befestigungselement 7 kommt beispielsweise eine sogenannte Invar-Legierung in Betracht, die einen Wärmeausdehnungskoeffizienten α von beispielsweise 1 • 10⁻⁶ grd⁻¹ aufweist.

Wie die vorstehenden Erläuterungen zu Fig. 1 erkennen lassen, können bei dieser Bauweise eine Vielzahl von Wegsensoren auch in einen Kolben in Serienbauart eingebaut werden. Da mehrere Wegsensoren 8 gleichmäßig über den Umfang verteilt angeordnet sind, kann bei der Auf- und Abbewegung des Kolbens für jede Kolbenstellung der Abstand zwischen dem jeweiligen Wegsensor 8 und der Zylinderwand 12 erfaßt werden, so daß entsprechend der Zahl der Wegsensoren auch eine entsprechende Anzahl von Meßsignalen vorliegt, die in der meßtechnischen Zusammenfassung und Auswertung eine Aussage über die Umfangskontur des Zylinderrohres 1 für die jeweilige Meßebene ergeben. Da es sich um einen betriebsfähigen Motor handelt, kann dann die Kontur der Zylinderwandung 12 in Abhängigkeit von der Stellung der Kurbelwelle bzw. in bezug zum oberen und unteren Totpunkt ermittelt werden.

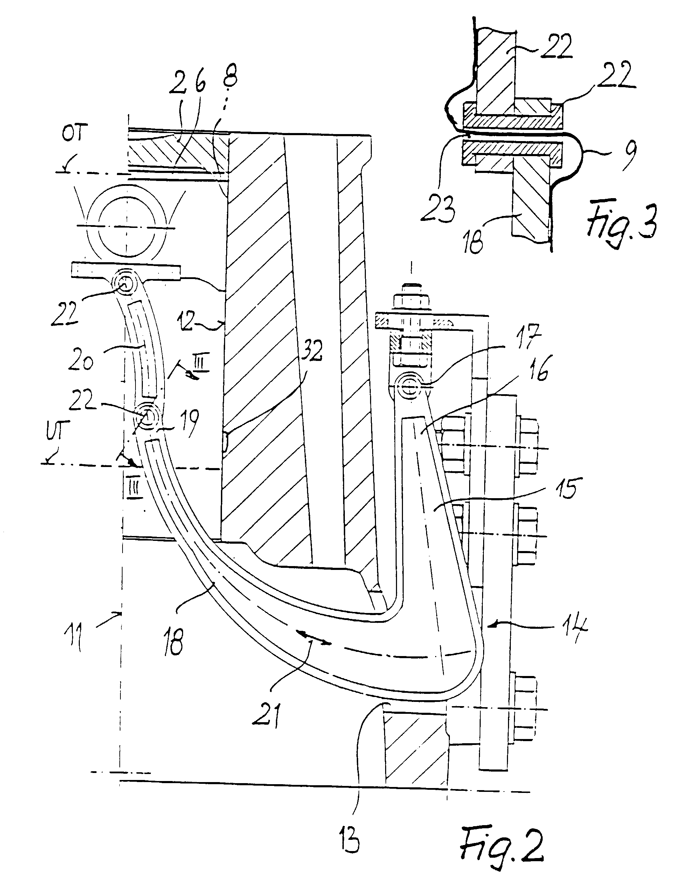

Fig. 2 zeigt einen schematischen Vertikalschnitt durch einen Zylinder eines Kolbenverbrennungsmotors, wobei der Kolben 2 in der oberen Totpunktlage dargestellt ist. Die Pleuelstange ist aus Gründen der klareren Darstellung weggelassen. Der hier schematisch dargestellte Teil eines Motorblockes weist unterhalb des Zylinderbereichs eine Durchtrittsöffnung 13 auf, durch die ein Übertragungselement 14 hindurchgeführt ist und an dem die Signalleitungen befestigt und aus dem Motor herausgeführt sind. Das Übertragungselement 14 wird im wesentlichen durch eine in etwa V-förmige Schwinge 15 gebildet, die mit dem Ende ihres einen Schwingenarms 16 seitlich auf der Außenseite des Motorblocks über ein gehäusefestes Lager 17 angelenkt ist. Der andere Schwingenarm 18 ist hierbei bogenförmig, vorzugsweise kreisbogenförmig ausgebildet, wobei der Mittelpunkt des die Kontur bestimmenden Kreisbogens im Lager 17 liegt. Mit seinem freien Ende 19 ist die Schwinge 15 über einen Zwischenlenker 20 am Kolben 2 angelenkt. Die Schwinge 15 kann somit bei der Auf- und Abbewegung des Kolbens um das gehäusefeste Lager 17 in Richtung des Pfeiles 21 hin- und herschwingen, wobei über die Ankopplung durch den Zwischenlenker 20 aus dieser Bewegung resultierende Kräfte quer zur Bewegungsrichtung des Kolbens 2 weitgehend von diesem ferngehalten werden können.

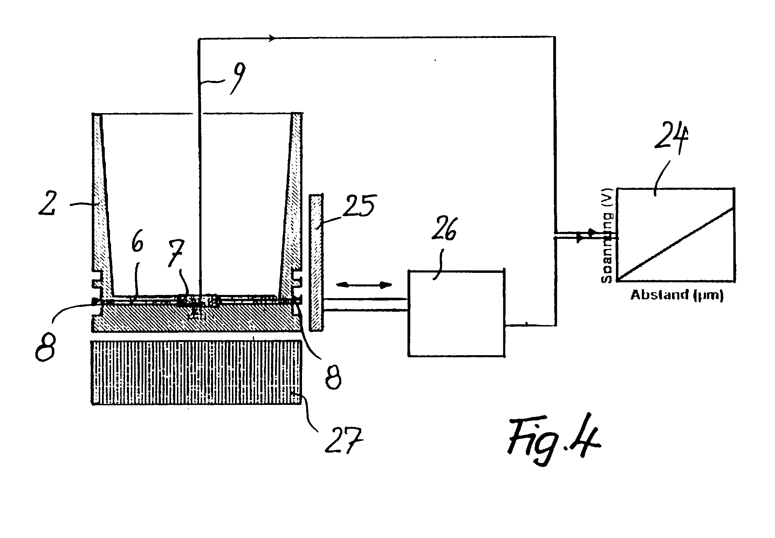

Wie vorstehend bereits erwähnt, sind die Signalleitungen 9 der einzelnen Wegsensoren 8 aus dem zentralen Befestigungselement 7 am Kolben 2 herausgeführt und zu einem Kabel zusammengefaßt. Dieses Signalkabel ist auf dem Zwischenlenker 20 und auf der Schwinge 15 befestigt und kann so bis in den Bereich des gehäusefesten Lagers 17 aus dem Motor herausgeführt werden und dann mit der Auswerteeinrichtung verbunden werden. Um nun eine Biegebeanspruchung dieses Signalkabels weitgehend zu vermeiden ist, wie die Schnittdarstellung in Fig. 3 zeigt, der Übergang jeweils vom Kolben 2 auf den Zwischenlenker 20, vom Zwischenlenker 20 auf die Schwinge 15 und von der Schwinge 15 auf den gehäusefesten Teil der auf der Außenseite des Motors angeordneten Schwingenlagerung 17 so ausgestaltet, daß jeweils die Gelenkbolzen 22 des jeweiligen Lager- bzw. Gelenkpunktes mit einer Axialbohrung 23 versehen sind, durch die die Signalleitungen 9 jeweils von dem einen Element auf das andere Element übergeleitet sind. In Fig. 3 ist der Bereich der Anlenkung des Zwischenlenkers 20 am Schwingenarm 18 dargestellt. Hierdurch wird erreicht, daß die Signalleitungen 9 trotz des relativ großen Schwenkwinkels des Gelenkes 19 und des Gelenkes 17 in diesem Bereich praktisch nicht auf Biegung sondern nur auf Torsion belastet werden, wobei durch eine entsprechend lockere Verdrillung in diesem Bereich die Torsionsbelastung noch reduziert werden kann.

Wie Fig. 1 und 2 erkennen lassen, kann mit einer derartigen Konzeption die Deformation eines Zylinders statisch und in kaltem Zustand wie bisher gemessen werden, da durch eine entsprechende Verdrehung der Kurbelwelle jede gewünschte Position des Kolbens im Zylinder eingestellt werden kann. Des gleichen ist es auch möglich, heiß-statische Messungen vorzunehmen. Da nur geringfügige Änderungen am Kolben und am Motorblock vorzunehmen sind, ergibt sich aber darüber hinaus auch die Möglichkeit, derartige Verformungsmessungen auch im Betrieb vorzunehmen. Die Verwendung von nur geringfügig umgerüsteten Serienkolben einerseits und die geringfügigen Modifikationen am Motorblock, der nur mit einer schmalen Durchtrittsöffnung 13 zu versehen ist, erlaubt es darüber hinaus, diese Messungen im sogenannten gefeuerten Betrieb bis in den Bereich der vorgesehenen Nenndrehzahlen des Motors durchzuführen. Die vorstehend anhand von Fig. 2 beschriebene Konzeption des Übertragungselementes erlaubt eine Konstruktion, die hinsichtlich der Festigkeit einerseits und der Massenträgheitsmomente andererseits keine Rückeinflüsse auf die Verformung bewirkt.

Für die Qualität der Meßergebnisse ist es von Bedeutung, daß die induktiven Wegsensoren nach dem Einbau in den Kolben kalibriert werden können. Dies geht mit Hilfe einer Kalibriervorrichtung, wie sie schematisch in Fig. 4 dargestellt ist. Nach dem Einbau der Wegsensoren 8 mit ihren Trägerelementen 6 und der Befestigung über das zentrale Befestigungselement 7 am Kolben 2 werden die Signalleitungen 9 zunächst auf eine Meßeinrichtung 24 aufgeschaltet. Der Kolben 2 wird hierbei auf dem Kolbenboden aufliegend befestigt und nacheinander bei jedem der Wegsensoren 8 eine simulierende "Zylinderwand 25" mit Hilfe einer elektromechanischen Wegmeßeinrichtung 26 gegenüber dem jeweiligen, zu kalibrierenden Wegsensor 8 verschoben. Die über die Wegmeßeinrichtung 26 gemessenen tatsächlichen Abstandswerte werden mit den von den Wegsensoren berührungslos "erfühlten" Werten verglichen, so daß für jeden Wegsensor eine entsprechende Eichkurve erstellt werden kann. Zur Überprüfung des Temperatureinflusses kann der Kolben 2 mit Hilfe einer Heizvorrichtung 27 auf Kolbenbetriebstemperatur erhitzt werden, so daß es auch möglich ist, die Wegsensoren für die im gefeuerten Motorbetrieb auftretenden Temperaturen zu kalibrieren.

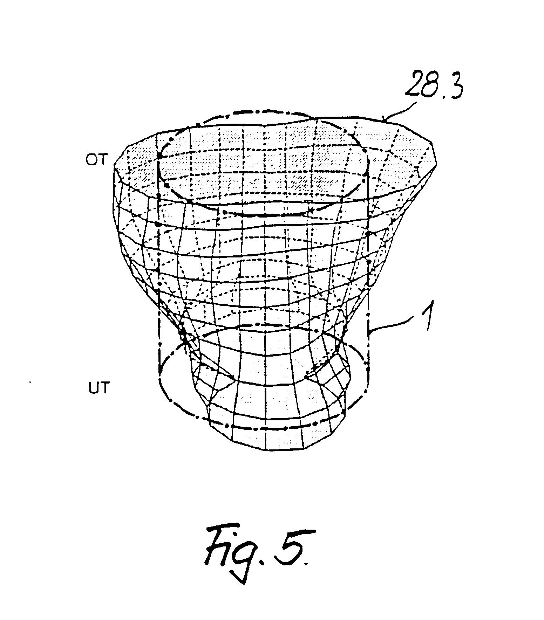

In Fig. 5 ist in starker Vergrößerung eine aus einer Messung gewonnene Darstellung des Verzuges eines Zylinderrohres bei Vollast gezeigt. Es handelt sich hierbei um einen Motor mit nassen Laufbuchsen aus Grauguß, dessen Leichtmetall-Zylinderkopf die Buchse im oberen Bereich in Motorlängsrichtung verzieht, eine Eigenart dieser Bauweise. Die ideale, unverformte Zylinderkontur ist hierbei strichpunktiert ebenfalls eingezeichnet.

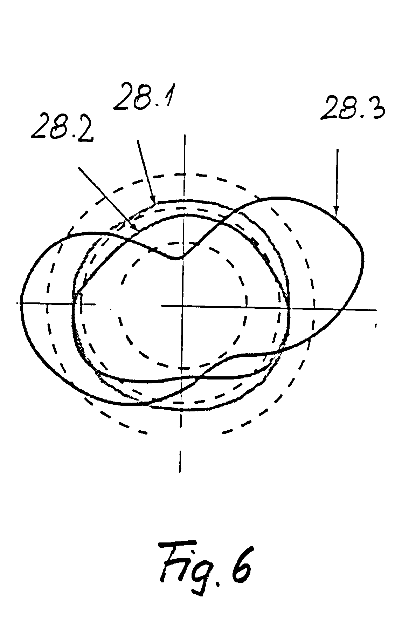

In Fig. 6 sind ebenfalls in größerer Darstellung unterschiedliche Deformationskurven für verschiedene Lastzustände für die Zylinderwandung bei einer Stellung des Kolbens im oberen Totpunkt dargestellt. Die Kurve 28.1 zeigt hierbei die fertigungsbedingte Deformation des Zylinderrohres in kaltem Zustand. Die Kurve 28.2 zeigt die bei einem Leerlaufbetrieb sich einstellende Deformation. Die Kurve 28.3 zeigt die sich bei Vollast einstellende Deformation, wie sie auch aus der Darstellung in Fig. 5 abgelesen werden kann. Aus dieser Darstellung lassen sich auch Bedeutung und Möglichkeiten der anhand von Fig. 1 und 2 beschriebenen Meßeinrichtung erkennen. Während die Deformationskurve 28.2 im Leerlaufbetrieb noch angenähert als "Kreisform" angesprochen werden kann, zeigt die Deformationskurve 28.3, welche erheblichen Nachteile im Betrieb bei dieser Motorkonstruktion auftreten, so daß es im Hinblick auf eine Optimierung geradezu zwingend ist, die Konstruktion so zu ändern, daß ein derartiger Verzug nicht eintritt.

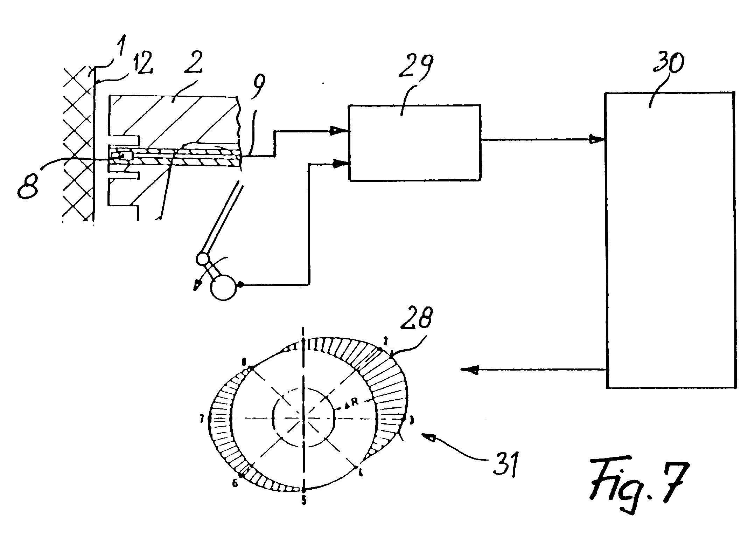

In Fig. 7 ist schematisch in Form eines Blockschaltbildes die Meßeinrichtung dargestellt. Die von den einzelnen Wegsensoren 8 im Kolben 2 erfaßten Signale über den Abstand der Wegsensoren 8 zur Zylinderwandung 12 werden, wie anhand von Fig. 2 beschrieben, über die zusammengefaßten Signalleitungen 9 aus dem Motor herausgeführt und in einem Verstärker 29 in gewünschtem Umfange verstärkt. Gleichzeitig wird über einen Drehwinkelgeber die jeweilige Kurbelstellung erfaßt, so daß das Meßsignal jedes Wegsensors 8 in Abhängigkeit von der Kurbelstellung erfaßt wird. Die verstärkten Signale werden in einer Auswerte- und Recheneinheit 30 ausgewertet und verarbeitet, so daß bei Einsatz eines entsprechend ausgerüsteten Rechners die Deformationskontur 28 jeder Meßebene ausgegeben werden kann, wie dies in Fig. 7 als "Meßergebnis" 31 in bezug auf einen Referenzkreis dargestellt ist.
Die einzelnen Wegsensoren wurden vor dem Einbau des jeweiligen Kolbens in den Motor in der anhand von Fig. 4 beschriebenen Weise kalibriert. Um nun auch während des Betriebes kontrollieren zu können, inwieweit die Kalibrierung stabil bleibt oder sich unter der Einwirkung von Betriebseinflüssen ändert, ist in der Zylinderwandung 12, wie in Fig. 2 dargestellt, jeweils im Bereich des unteren Totpunktes für jeden Wegsensor 8 eine Kalibriernut 32 angeordnet. Diese Kalibriernut weist in Zylinderachsrichtung eine Länge von etwa 6 mm auf und besitzt eine vorgebbare Tiefe von beispielsweise 0,05 mm. Überfährt nun der zugehörige Wegsensor diese Kalibriernut, so werden jeweils Signalsprünge erzeugt, über die kontrolliert werden kann, ob sich die Ausgangskalibrierung der Wegsensoren während des Betriebes geändert hat.

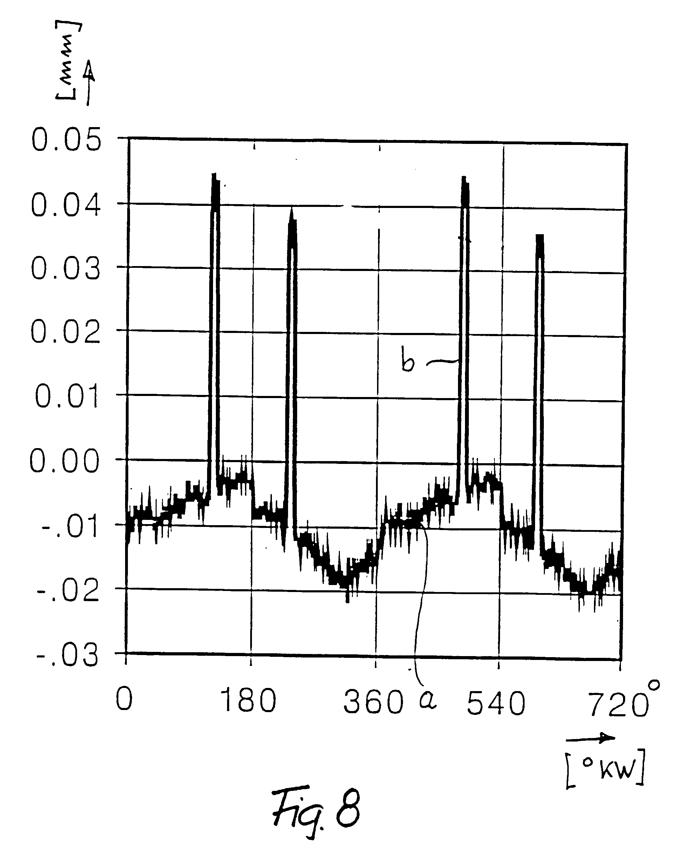

In Fig. 8 ist ein Signalschrieb für einen Wegsensor über 720° Kurbelwinkel dargestellt. Der Meßkurvenbereich a zeigt hierbei die durch die Zylinderdeformation vorgegebenen Signaländerungen. Der Signalsprung b zeigt das Signal, das der Sensor jeweils beim Überfahren seiner Kalibriernut liefert und der der Nuttiefe proportional ist. Da die Nuttiefe vorbekannt ist, läßt sich ablesen, ob sich die Kalibrierung der einzelnen Wegsensoren während des Betriebes geändert hat, so daß ggf. auch nachkalibriert werden kann.

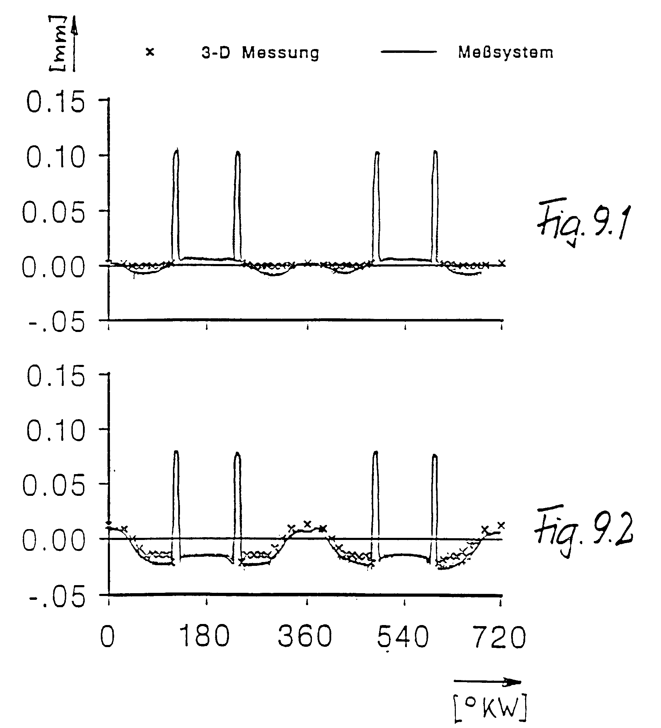

In Fig. 9.1 und 9.2 sind in einer Überlagerung vergleichende Meßdiagramme dargestellt. In Fig. 9 wurde ein gegebenes Zylinderrohr in kaltem Zustand statisch und unverspannt vermessen. Die mit x gekennzeichnete Meßkurve zeigt das Meßergebnis, das mit Hilfe einer 3-D-Meßmaschine gewonnen wurde. Der ausgezogene Kurvenverlauf zeigt den Verlauf der Durchmesseränderung in Abhängigkeit vom Kurbelwinkel, wie er mit Meßeinrichtung gem. Fig. 2 erzielt wurde. Fig. 9.2 zeigt dann das vergleichende Meßergebnis für eine Zylinderdeformation, bei einem in warmem Zustand statisch verspannten Zylinder. Die Kalibriersignale b sind hierbei deutlich zu erkennen.

Auflistung des Standes der Technik:
K. Lönne
   Das Goetze Zylinderverzugsmeßsystem und Möglichkeiten zur Reduzierung der Zylinderverzüge
   Fachschrift D11, Goetze AG, Burscheid
P. Jöhren
   Einrichtung zur Ermittlung von Zylinderverzügen und ihren Ursachen
   Fachschrift K11, Goetze AG, Burscheid
F. Stecher
   Zylinderverformungen - Untersuchungen in einer Modellanlage und im laufenden Motor
   MTZ 31 (1970) 12

## Patentansprüche

1. Einrichtung zur Vermessung der Deformation von Zylindern einer Kolbenverbrennungsmaschine, die einen im zu messenden Zylinder (1) führbaren Kolben (2) aufweist, der wenigstens zwei radiale Bohrungen (5) aufweist, in denen jeweils an einem Trägerelement (6) ein elektrisch-induktiver Wegsensor (8) gegenüber dem Kolben (2) relativ bewegbar und berührungslos mit Abstand zur Zylinderwandung gehalten ist, wobei die Trägerelemente (6) jeweils im Bereich der Kolbenachse (11) am Kolben (2) befestigt sind und die Signalleitungen (9) der einzelnen Wegsensoren (8) mit einer Meß- und Auswerteeinrichtung verbindbar sind.

2. Einrichtung nach Anspruch 1, dadurch gekennzeichnet, daß die Bohrungen (5) für die Trägerelemente (6) im oberen Bereich, vorzugsweise in der Ebene des Kolbenbodens zwischen zwei Kolbenringen ausmünden.

3. Einrichtung nach Anspruch 1 oder 2, insbesondere zur Vermessung der Zylinderdeformation am laufenden Motor, dadurch gekennzeichnet, daß der mit den Wegsensoren (8) bestückte Kolben (2) über eine Pleuelstange (10) mit der Motorkurbelwelle verbunden ist und daß die Signalleitungen (9) der einzelnen Wegsensoren (8) über ein mit dem Kolben (2) verbundenes Übertragungselement (14) aus dem Motor herausgeführt sind.

4. Einrichtung nach einem der Ansprüche 1 bis 3, dadurch gekennzeichnet, daß jeweils zwei Wegsensoren (8) diametral nach außen weisend am Kolben (2) angeordnet sind.

5. Einrichtung nach einem der Ansprüche 1 bis 4, dadurch gekennzeichnet, daß die Trägerelemente (6) rohrförmig ausgebildet sind und die Signalleitungen (9) des jeweils zugeordneten Wegsensors (8) aufnehmen.

6. Einrichtung nach einem der Ansprüche 1 bis 5, dadurch gekennzeichnet, daß die Trägerelemente (6) über ein zentrales Befestigungselement (7) am Kolben befestigt sind.

7. Einrichtung nach einem der Ansprüche 1 bis 6, dadurch gekennzeichnet, daß zumindest die Trägerelemente (6), vorzugsweise auch das zentrale Befestigungselement (7), aus einem Material mit sehr niedrigem Wärmeausdehnungskoeffizienten bestehen.

8. Einrichtung nach einem der Ansprüche 1 bis 7, dadurch gekennzeichnet, daß das Material für die Trägerelemente (6) und/oder das zentrale Befestigungselement (7) einen Wärmeausdehnungskoeffizienten α zwischen - 0,5 und + 2 • 10⁻⁶ grd⁻¹ aufweist.

9. Einrichtung nach einem der Ansprüche 1 bis 8, dadurch gekennzeichnet, daß das Übertragungselement (14) durch eine Schwinge (15) gebildet wird, die seitlich außen am Motorblock um eine quer zur Zylinderachse (11) ausgerichtete Achse schwenkbar gelagert ist und die mit ihrem freien Ende (19) mit dem Kolben (2) gelenkig verbunden ist.

10. Einrichtung nach einem der Ansprüche 1 bis 9, dadurch gekennzeichnet, daß das freie Ende (19) der Schwinge (15) über einen Zwischenlenker (20) mit dem Kolben (2) gelenkig verbunden ist.

11. Einrichtung nach einem der Ansprüche 1 bis 10, dadurch gekennzeichnet, daß die Schwinge (15) in etwa V-förmig ausgebildet ist, wobei die gehäusefeste Anlenkung (17) einerseits und die Anlenkung (19, 22) am Kolben (2) andererseits bei dessen Stellung im oberen Totpunkt etwa auf gleicher Höhe liegen.

12. Einrichtung nach einem der Ansprüche 1 bi 11, dadurch gekennzeichnet, daß der in den Motorraum hineinragende Schwingenarm (18) bogenförmig ausgebildet ist.

13. Einrichtung nach einem der Ansprüche 1 bis 12, dadurch gekennzeichnet, daß der in den Motorraum hineinragende Schwingenarm (18) kreisbogenförmig ausgebildet ist, wobei der Mittelpunkt des Kreisbogens durch die Achse der gehäusefesten Anlenkung (17) gebildet wird.

14. Einrichtung nach einem der Ansprüche 1 bis 13, dadurch gekennzeichnet, daß die Signalleitungen (9) der Wegsensoren (8) auf der Schwinge (15) und/oder dem Zwischenlenker (20) befestigt sind und jeweils an den Anlenkungen durch die axialen Bohrungen (23) der Gelenke (22) von einem Teil zum anderen Teil geführt sind.

15. Einrichtung nach einem der Ansprüche 1 bis 14, dadurch gekennzeichnet, daß mit Abstand oberhalb der unteren Totpunktstellung der Wegsensoren (8) in der Zylinderlauffläche (12) in Zylinderachsrichtung ausgerichtete, jeweils einem Wegsensor (8) zugeordnete Kalibriernuten (32) mit vorgegebener Tiefe angeordnet sind, die bei der Kolbenbewegung von dem zugehörigen Sensor (8) überstrichen werden.

## Claims

1. A device for measuring the deformation of cylinders of a piston combustion engine, which has a piston (2) able to be guided in the cylinder (1) which is to be measured, which piston (2) has at least two radial bores (5) in which respectively on a carrier element (6) an electro-inductive path sensor (8) is held so as to be relatively movable with respect to the piston (2) and in a non-contact manner at a distance from the cylinder wall, wherein the carrier elements (6) are respectively fastened on the piston (2) in the region of the piston axis (11) and the signal lines (9) of the individual path sensors (8) are able to be connected with a measurement- and evaluation device.

2. A device according to Claim 1, characterised in that the bores (5) for the carrier elements (6) open out in the upper region, preferably in the plane of the piston base between two piston rings.

3. A device according to Claim 1 or 2, in particular for measuring the cylinder deformation on the running motor, characterised in that the piston (2), equipped with the path sensors (8) is connected via a piston rod (10) with the motor connecting rod and that the signal lines (9) of the individual path sensors (8) are carried out from the engine by means of a transmission element (14) connected with the piston (2).

4. A device according to one of Claims 1 to 3, characterised in that respectively two path sensors (8) are arranged on the piston (2) pointing diametrically outwards.

5. A device according to one of Claims 1 to 4, characterised in that the carrier elements (6) are constructed in a tubular shape and receive the signal lines (9) of the respectively associated path sensor (8).

6. A device according to one of Claims 1 to 5, characterised in that the carrier elements (6) are fastened to the piston by means of a central fastening element (7).

7. A device according to one of Claims 1 to 6, characterised in that at least the carrier elements (6), preferably also the central fastening element (7), consist of a material with very low coefficient of thermal expansion.

8. A device according to one of Claims 1 to 7, characterised in that the material for the carrier elements (6) and/or the central fastening element (7) has a coefficient of thermal expansion a between - 0.5 and + 2 · 10⁻⁶ grd⁻¹.

9. A device according to one of Claims 1 to 8, characterised in that the transmission element (14) is formed by a rocker (15) which is mounted laterally externally on the engine block so as to be swivellable about an axis aligned transversely to the cylinder axis (11) and which rocker (15) is articulatedly connected by its free end (19) with the piston (2).

10. A device according to one of Claims 1 to 9, characterised in that the free end (19) of the rocker (15) is articulatedly connected with the piston (2) via an intermediate guide (20).

11. A device according to one of Claims 1 to 10, characterised in that the rocker (15) is constructed approximately in a V-shape, wherein on the one hand the articulation (17) fixed with the housing and on the other hand the articulation (19, 22) on the piston (2) at its position in the upper dead centre lie approximately at the same height.

12. A device according to one of Claims 1 to 11, characterised in that the rocker arm (18) projecting into the engine chamber is constructed in an arc shape.

13. A device according to one of Claims 1 to 12, characterised in that the rocker arm (18) projecting into the engine chamber is constructed in a circular arc shape, wherein the central point of the circular arc is formed by the axis of the articulation (17) fixed to the housing.

14. A device according to one of Claims 1 to 13, characterised in that the signal lines (9) of the path sensors (8) are fastened to the rocker (15) and/or to the intermediate guide (20) and respectively at the articulations are directed through the axial bores (23) of the joints (22) from one part to the other part.

15. A device according to one of Claims 1 to 14, characterised in that there are arranged at a distance above the lower dead point position of the path sensors (8) calibration grooves (23) with a given depth, aligned in the cylinder running surface (12) in the direction of the cylinder axis, associated respectively with a path sensor (8), which grooves (32) are swept over by the associated sensor (8) on movement of the piston.

## Revendications

1. Dispositif pour mesurer la déformation subie par des cylindres d'un moteur à combustion interne à pistons, présentant un piston (2) qui peut être guidé dans le cylindre (1) à mesurer, et comporte au moins deux perçages radiaux (5) dans lesquels un capteur de courses (8) électro-inductif est mobile par rapport au piston (2), sur un élément respectif de support (6), et est maintenu à distance de la paroi cylindrique, avec absence de contact, les éléments de support (6) étant respectivement fixés au piston (2), dans la région de l'axe (11) dudit piston, et les conducteurs de signaux (9) des capteurs de courses individuels (8) pouvant être connectés à un dispositif de mesure et d'interprétation.

2. Dispositif selon la revendication 1, caractérisé par le fait que les perçages (5) affectés aux éléments de support (6) débouchent dans la région supérieure, de préférence dans le plan du fond du piston, entre deux segments dudit piston.

3. Dispositif selon la revendication 1 ou 2, notamment pour mesurer la déformation des cylindres sur le moteur en fonction, caractérisé par le fait que le piston (2), garni des capteurs de courses (8), est relié au vilebrequin du moteur par l'intermédiaire d'une bielle (10) ; et par le fait que les conducteurs de signaux (9) des capteurs de courses individuels (8) sont guidés hors du moteur par l'intermédiaire d'un élément de transmission (14) relié audit piston (2).

4. Dispositif selon l'une des revendications 1 à 3, caractérisé par le fait que deux capteurs de courses (8), orientés diamétralement vers l'extérieur, sont respectivement implantés sur le piston (2).

5. Dispositif selon l'une des revendications 1 à 4, caractérisé par le fait que les éléments de support (6) sont de réalisation tubulaire, et reçoivent les conducteurs de signaux (9) du capteur de courses (8) respectivement associé.

6. Dispositif selon l'une des revendications 1 à 5, caractérisé par le fait que les éléments de support (6) sont fixés au piston par l'intermédiaire d'un élément central de fixation (7).

7. Dispositif selon l'une des revendications 1 à 6, caractérisé par le fait qu'au moins les éléments de support (6), de préférence aussi l'élément central de fixation (7), sont constitués d'un matériau présentant un très faible coefficient de dilatation thermique.

8. Dispositif selon l'une des revendications 1 à 7, caractérisé par le fait que le matériau destiné aux éléments de support (6), et/ou à l'élément central de fixation (7), présente un coefficient α de dilatation thermique compris entre - 0,5 et + 2 . 10⁻⁶ °⁻¹.

9. Dispositif selon l'une des revendications 1 à 8, caractérisé par le fait que l'élément de transmission (14) est formé par une biellette oscillante (15) qui est montée à pivotement latéral extérieur, sur le bloc-moteur, autour d'un axe orienté transversalement par rapport à l'axe (11) du piston, et est reliée au piston (2) de manière articulée, par son extrémité libre (19).

10. Dispositif selon l'une des revendications 1 à 9, caractérisé par le fait que l'extrémité libre (19) de la biellette oscillante (15) est reliée au piston (2) de manière articulée, au moyen d'un levier oscillant intermédiaire (20).

11. Dispositif selon l'une des revendications 1 à 10, caractérisé par le fait que la biellette oscillante (15) est sensiblement réalisée de configuration en V, d'une part l'articulation (17) assujettie au carter et, d'autre part, l'articulation (19, 22) sur le piston (2), étant situées sensiblement à la même hauteur lorsque ledit piston occupe la position de point mort haut.

12. Dispositif selon l'une des revendications 1 à 11, caractérisé par le fait que le bras (18) de la biellette oscillante, pénétrant dans le compartiment moteur, est de réalisation courbe.

13. Dispositif selon l'une des revendications 1 à 12, caractérisé par le fait que le bras (18) de la biellette oscillante, pénétrant dans le compartiment moteur, est de réalisation en arc de cercle, le centre de l'arc de cercle étant matérialisé par l'axe de l'articulation (17) assujettie au carter.

14. Dispositif selon l'une des revendications 1 à 13, caractérisé par le fait que les conducteurs de signaux (9) des capteurs de courses (8) sont fixés sur la biellette oscillante (15) et/ou sur le levier oscillant intermédiaire (20), et sont respectivement guidés d'une pièce à l'autre pièce, dans la zone des articulations, en traversant les trous axiaux (23) des axes d'articulation (22).

15. Dispositif selon l'une des revendications 1 à 14, caractérisé par le fait que des rainures de calibrage (32) de profondeur préétablie, respectivement affectées à un capteur de courses (8) et orientées dans la direction axiale du cylindre, sont pratiquées dans la surface de roulement (12) dudit cylindre, à distance au-dessus de la position de point mort bas des capteurs de courses (8), lesdites rainures étant balayées par le capteur associé (8) lors du mouvement du piston.
